# EUROPÄISCHE PATENTSCHRIFT

(11) **EP 2 243 647 B1**
(45) Veröffentlichungstag und Bekanntmachung des Hinweises auf die Patenterteilung: **28.09.2011**
(21) Anmeldenummer: 10157699.9
(22) Anmeldetag: 25.03.2010
(51) Int. Cl.: B60H 1/34

(54) **Luftdüse zur Verwendung in Kraftfahrzeugen**
Air nozzle for use in motor vehicles
Aérateur destiné à l'utilisation dans des véhicules automobiles

(30) Priorität: 22.04.2009 DE 102009003816
(43) Veröffentlichungstag der Anmeldung: 27.10.2010
(73) Patentinhaber: Dr. Schneider Kunststoffwerke GmbH, 96317 Kronach (DE)
(72) Erfinder: Förtsch, Thorsten, 96328 Küps-Tüschnitz (DE); Knorr, Frank, 96279 Weidhausen (DE)
(74) Vertreter: Pröll, Jürgen

(56) Entgegenhaltungen:
- EP-A1- 1 033 269
- EP-A1- 1 452 359
- EP-B1- 1 752 324
- DE-U1-202007 010 190
- JP-A- 11 180 140
- US-A1- 2005 042 982

## Beschreibung

Die Erfindung betrifft eine Luftdüse zur Führung eines Luftstromes aus einem Luftzuführschacht oder einer Leitung in Heizungs-, Lüftungs- oder Klimaanlagen insbesondere in Kraftfahrzeugen mit den im Oberbegriff des Anspruches 1 angegebenen Merkmalen.

Eine Luftdüse der gattungsgemäßen Art ist aus der EP 1 752 324 B1 bekannt. Zur Erreichung eines stufenlosen und feinfühligen Übergangs zwischen einer direkten und einer indirekten Belüftung durch eine diffuse Anströmung durch aufgefächerte Lamellen ist vorgesehen, dass das Koppelelement für die Lamellen eine Koppelstange ist, die mit einem Bedienrad betätigbar verbunden ist. An den Stirnflächen der Lamellen sind zapfenförmige Vorsprünge vorgesehen, die in Durchbrüchen in der Wand des Gehäuses geführt sind. In einer Alternative ist das Koppelelement für die Lamelle als Hubplatte ausgestaltet, wobei die Hubplatte in zwei Ausnehmungen in der Wand des Gehäuses abgestützt und in Richtung der Längsachse der Luftdüse verlagerbar ist.

Des Weiteren ist aus der EP 1 452 358 A1 ein Luftausströmer zum Verbauen in einem Fahrzeuginnenraum mit einem Luftaustritt bekannt, in dem Lamellen schwenkbar angeordnet sind, die in eine den Luftaustritt verschließende Stellung schwenkbar sind. Im geschlossenen Zustand der Lamellen ist ein Luftstrom über spaltförmige Ausnehmungen in den Lamellen sichergestellt. Auch hier ist ein Bedienrad zur Betätigung der Lamellen vorgesehen, die über ein Koppelelement gemeinsam verschwenkbar sind. In einer weiteren Ausführung sind auch Vertikallamellen zusätzlich zu den Horizontallamellen vorgesehen, die über einen Schieber an einer Horizontallamelle in bekannter Weise ebenfalls verschwenkbar sind.

Bei herkömmlichen Ausströmern, bei denen die H-Lamellen (Horizontallamellen) verschließbar sind, werden die H-Lamellen durch Drehen des Bedienrades betätigt. Das Bedienrad dient zugleich dazu, die Luftklappe im Inneren des Gehäuses zu öffnen und zu schließen. Das Düsengehäuse ist also sowohl rückseitig als auch vorderseitig durch Betätigen des Bedienrades abdichtbar.

Eine weitere Luftdüse der gattungsgemäßen Art ist weiterhin aus EP1033269, das den nächst liegenden Stand der Technik darstellt, offenbart.

Ausgehend von dem Stand der Technik liegt der vorliegenden Erfindung die Aufgabe zugrunde, eine Kinematik anzugeben, die einerseits eine Regulierung der Luftmenge über die Luftklappe durch Bedienen eines Bedienrades und andererseits eine unabhängige individuelle Luftrichtungseinstellung des austretenden Luftstroms ermöglicht, wobei über ein und dasselbe Bedienrad mindestens die Sperrung des Luftstromes sowohl über die Horizontallamellen als auch über die Luftklappe erzielbar sein soll.

Die Aufgabe löst die Erfindung durch Ausgestaltung der Luftdüse gemäß der im Anspruch 1 angegeben technischen Lehre.

Vorteilhafte Weiterbildungen der Erfindung sind in den Unteransprüchen im Detail angegeben.

Gemäß der Lehre der Erfindung ist vorgesehen, dass das Bedienrad und die Luftklappe einerseits und das Bedienrad mit der Lamellenanordnung mit den Lamellen andererseits über eine derartige Kinematikanordnung gekoppelt sind, dass die Lamellen beim Verschließen der Luftklappe durch Drehung des Bedienrades in eine Richtung automatisch aus jeder Öffnungsstellung in die Schließposition verbringbar sind und durch entgegengesetztes Drehen des Bedienrades beim Öffnen oder vor oder nach dem Öffnen der Luftklappe die Lamellen mindestens in eine erste Öffnungsstellung verschwenken, aus der sie durch Bedienen der Steuerlamelle in beliebige Öffnungsstellungen unabhängig vom weiteren Drehen des Bedienrades in gleiche Richtung verschwenkbar sind. Durch die Kinematikanordnung wird sichergestellt, dass bei geschlossener Luftklappe zugleich auch sämtliche Horizontallamellen geschlossen sind. Mit Drehung des Bedienrades kann in einer Ausführungsform sofort die Luftklappe kontinuierlich geöffnet werden, wobei gleichzeitig oder verzögert die Horizontallamellen in eine erste Öffnungsstellung gelangen, in der kleine Spalte zwischen den Horizontallamellen entstehen, so dass der Luftstrom diffus auszutreten vermag.

In einer Alternative können durch Drehen zunächst auch die Horizontallamellen in die beschriebene Öffnungsstellung verbracht werden, ohne dass die Luftklappe geöffnet wird. Erst durch weiteres Drehen des Bedienrades wird die Luftklappe bis in die maximale Öffnungsstellung verschwenkt, in der sie parallel zur Längsachse des Gehäuses verläuft. Die Luftmenge kann hierüber reguliert werden, ohne dass sich der diffuse Austritt durch die Horizontallamellen ändern würde. Die Horizontallamellen sind über das Koppelelement miteinander beweglich verbunden und können bei Betätigung einer Steuerlamelle oder irgendeiner der vorhandenen Lamellen unabhängig von der Stellung des Bedienrades in Folge und damit unabhängig von der Regulierung der Luftklappe verschwenkt werden. Dazu wird die Steuerlamelle oder auch eine der anderen Lamellen durch Druck mit dem Finger verschwenkt, wodurch alle übrigen über das Koppelelement mitgekoppelten Lamellen in gleicher Weise eine Schwenkbewegung vollziehen. Diese Schwenkbewegung kann dabei völlig synchron in eine Richtung verlaufen oder aber auch durch gegenläufige Kurvensteuerung bekannter Art in den seitlichen Gehäusewänden in verschiedene Richtungen oder asynchron, so dass diese in verschiedene Schrägstellungen verbracht werden, wenn die Steuerlamelle verschwenkt wird. Hierzu sind Kurvenführungen in den Gehäusewänden und/oder dem Koppelelement vorgesehen. Die Lamellen können also durch Verschwenken unabhängig von der Betätigung des Bedienrades in beliebige Öffnungsstellungen verbracht werden, in der der Luftstrom abgelenkt hindurchtreten kann. Durch Verschwenken der Steuerlamelle werden die anderen Lamellen wiederum verschwenkt, so dass jede gewünschte diffuse Strömung oder Richtungsströmung des Luftstromes möglich ist. Auch ist es möglich, die Kinematik so auszulegen, dass nach Erreichen der ersten Öffnungsstellung die Lamellen durch weiteres Drehen des Bedienelementes in die gleiche Richtung von dem Koppelelement zusätzlich auch gemeinsam verstellbar sind.

Wenn nun das Bedienrad in die entgegengesetzte Richtung gedreht wird, sorgt die Kinematikanordnung immer dafür, dass mit dem Verschwenken der Luftklappe in ihre Schließstellung zugleich aber auch alle Horizontallamellen mitgenommen werden und ebenfalls in die Schließstellung verschwenken, so dass bei geschlossener Luftklappe alle Horizontallamellen sich in der Schließstellung befinden und somit vorderseitig die Luftaustrittsöffnung abdecken. Selbstverständlich können entsprechend der zuvor genannten Europäischen Patentanmeldung EP 1 452 358 A1 die Lamellen Ausnehmungen oder Bohrungen aufweisen, durch die ein Luftstrom dann diffus auszutreten vermag, wenn die Luftklappe geringfügig geöffnet ist und die Horizontallamellen in der Schließstellung stehen. Diese Anordnung ist alternativ ebenfalls vorgesehen. Dies erfolgt durch Steuerkurven, so dass beim Bedienen des Bedienrades zunächst die geschlossene Luftklappe geringfügig öffnet und ein diffuser Luftaustritt bei geschlossenen H-Lamellen gewährleistet ist. Erst durch weiteres Drehen werden dann die H-Lamellen in die erste Öffnungsposition verschwenkt. Dabei kann die Luftklappe sich kontinuierlich um einen Winkel weiterhin öffnen. Die Kinematikanordnung kann aber auch so ausgelegt sein, dass die Luftklappe zunächst in der geringen Öffnungsstellung verbleibt und erst nach dem Verschwenken der H-Lamellen in die erste Öffnungsposition durch weiteres Drehen ein Verschwenken der Luftklappe in die Öffnungsstellung ermöglicht wird. Die H-Lamellen können in jedem Fall aus der ersten Öffnungsstellung unabhängig von dem weiteren Öffnen der Luftklappe verschwenkt werden. Umgekehrt wird mit dem Bedienen des Bedienrades in entgegengesetzter Richtung zum Verschließen der Luftklappe über das Kupplungselement und den darin vorgesehen Mitnahmekurven die Mitnahmezapfen an dem Koppelelement automatisch mitgenommen, wodurch die H-Lamellen schlieβen.

In einer Ausführungsform ist vorgesehen, dass das Koppelelement auf der Achse des Bedienrades mit einer Kulisse verschieb- und verschwenkbar gelagert ist und durch in die Kulissen in dem Bedienrad eingreifende oder mit einer Kulissenbahn zusammenwirkende Zapfen, die an dem Koppelelement angebracht sind, in der einen oder anderen Drehrichtung des Bedienrades in Eingriff gelangen. Dies kann auch zeitlich nacheinanderfolgend vorgesehen sein.

Eine der Horizontallamellen, die als Steuerlammelle ausgebildet ist, kann auch ein aufgesetztes Schiebeelement aufweisen, über das mitgekoppelte Vertikallamellen, die hinter den Horizontallamellen im Gehäuse der Düse angeordnet sind, verschwenkbar sind. Die Vertikallamellen sind dabei oben- und untenseitig in der Gehäusewand verschwenkbar gelagert und über eine Kopplungsstange miteinander verbunden, die wiederum von dem gekoppelten Schiebeelement verschiebbar ist und ein Verschwenken der Vertikallamellen bewirkt.

Zur Realisierung der Kraftübertragung zwischen dem Bedienrad und der Luftklappenachse ist ein Kurbelgetriebe in weiterer Ausführungsform vorgesehen. Dieses kann aus einer Koppelstange bestehen, die schwenkbar am Kurbelarm und am Bedienrad angeordnet ist. Die Koppelstange kann aber auch in einer Kulisse in der Kurbel mit einem Zapfen geführt sein, um die beschriebene Folgesteuerung zu ermöglichen, nämlich dass zunächst die Luftklappe so lange verschlossen bleibt, bis die Horizontallamellen in die erste Öffnungsstellung verschwenkt sind und dann mitgenommen wird. Die Kurvenbahn kann aber auch so ausgeführt sein, dass zunächst die Luftklappe um einen bestimmten Spalt öffnet, bevor das Bedienrad mit dem Koppelelement die Horizontallamellen in die erste Öffnungsstellung verbringt. Danach erfolgt dann eine direkte Kraftübertragung und ein kontinuierliches Mitverschwenken der Luftklappe in Abhängigkeit von der Drehbewegung des Bedienrades, und zwar unabhängig von der oder zusätzlich zu der Verstellmöglichkeit der Horizontallamellen über das Bedienrad. Wird nun, egal aus welcher Stellung heraus, das Bedienrad zurückgedreht, so dass durch Kraftübertragung die Luftklappe schließt, so wird über Zapfen/Kulissenführungen zwischen Bedienrad und Koppelelement letzteres so verschwenkt, dass zumindest in dem Enddrehbereich des Bedienrades alle Horizontallamellen mitgenommen und in die Schließstellung verbracht werden, wenn die Luftklappe in Schließposition schwenkt oder diese schon eingenommen hat. Hierzu ist in weiterer Ausgestaltung vorgesehen, dass das Koppelelement an einer Seite als Lager Aufnahmen für stirnseitig aus den Seitenflächen der Lamellen vorstehende Mitnahmezapfen und ein Flächenelement mit einem kreissegmentförmigen Flächendurchbruch aufweist, in den eine Lagerhülse oder ein Lagerzapfen auf der Drehachse des Bedienrades eingreift, dass das Flächenelement des Bedienrades zwei Kulissenbahnen mit Endanschlägen aufweist, die in Wirkverbindung mit einem ersten und einem zweiten an dem Koppelelement angebrachten Zapfen stehen, wobei die Kulissenbahnen so aufeinander abgestimmt angeordnet sind und einen solchen Kurvenverlauf aufweisen, dass beim Drehen des Bedienrades in die eine Richtung der erste Zapfen an der ersten Kulissenbahn mindestens teilweise entlanggleitet und der zweite Zapfen an der zweiten Kulissenbahn mindestens teilweise anliegt, wobei der erste Zapfen gegen einen Anschlag fährt und der zweite Zapfen in seiner Endstellung gegen das Ende der zweiten Kulisse fährt und ein weiteres Verstellen des Koppelelementes verhindert, dass bei gegenläufiger Drehung des Bedienrades der zweite Zapfen eine Relativbewegung gegenüber der Kulissenbahn durchführt und der erste Zapfen von dem Anschlag abhebt, wodurch die Lamellen in die erste Öffnungsstellung gelangen und unabhängig vom Bedienrad betätigbar sind, und dass mit weiterer Drehung des Bedienrades die Luftklappe in eine individuelle Öffnungsstellung verschwenkbar ist.

Die Lamellen können darüber hinaus mindestens an den schmalen Stirnseiten erste Zapfen, die in Lagerbohrungen in den Gehäusewänden drehbar gelagert sind, und zweite Zapfen beabstandet zu den ersten aufweisen, die in kreisbogenförmigen Kulissen um die jeweilige Lagerbohrung beim Verschwenken der Lamellen geführt sind und auf deren vorstehendes Ende das jeweilige Lager an dem Koppelelement aufsetzbar ist. Dadurch wird eine zwangsweise Mitkopplung erreicht. Die Kurvenbahnen können aber auch so angeordnet sein, dass zum Beispiel zwei obenseitige Horizontallamellen und zwei untenseitige Horizontallamellen entgegengesetzt verschwenken, wie dies aus der eingangs genannten EP 1 752 324 B1 bekannt ist.

Bekanntlich bestehen die Teile einer Luftdüse aus Kunststoff, so auch bei der erfindungsgemäßen Luftdüse. Die Abmessungen der Lager und Lagerzapfen sind dabei so aufeinander abgestimmt oder die Materialien des Lagers sind so gewählt, dass eine leichte Bedienung ermöglicht wird, andererseits aber keine Klappergeräusche entstehen können. Die Kurbel kann direkt auf die Schwenkachse der Luftklappe wirken, beide Achsen fallen dann zusammen. Die Kurbel kann aber auch einen ersten Kurbelbetätigungsarm aufweisen, der über eine Koppelstange schwenkbeweglich mit dem Bedienrad verbunden ist, über die Drehachse der Kurbel hinausgehend ist ein Segmentteil vorgesehen, an oder in welchem eine Mitnahmeverzahnung oder ein Mitnahmebelag angeordnet ist, in das ein auf der Schwenkachse der Luftklappe vorgesehenes Ritzel oder ein Mitnahmerad oder ein konzentrisch vorstehender Zapfen an einer Lagerscheibe der Luftklappe eingreift, wodurch die Schwenkbewegung des Segmentteils in eine Drehbewegung der Luftklappe transformierbar ist. Die Kurbel kann aber auch erst bei geschlossener Luftklappe bewegbar sein oder das Ritzel oder Mitnahmerad oder der Zapfen gelangt erst in Wirkverbindung mit der Mitnahmefläche, wenn durch Mitkopplung über das Koppelelement die Lamellen in die erste Öffnungsstellung verschwenkt sind. Ferner kann vorgesehen sein, dass beim Drehen des Bedienrades aus der Schließstellung der Luftklappe zunächst die Luftklappe mindestens teilweise öffnet, bevor die Lamellen in die erste Öffnungsstellung verschwenken.

Die Erfindung wird nachfolgend anhand der in den Zeichnungen dargestellten Ausführungsbeispiele ergänzend erläutert.

In den Zeichnungen zeigen:
- Fig.1: in einer perspektivischen Zeichnung eine Düse gemäß der Erfindung mit einem Bedienrad und ei- ner Kurbel zum gesteuerten Verschwenken der Luftklappe, die nur angedeutet dargestellt ist, mit geschlossenen Horizontallamellen;
- Fig. 2: die in Fig. 1 dargestellte Düse mit in die erste Öffnungsposition durch Drehen des Bedien- rades verschwenkten Horizontallamellen;
- Fig. 3: die in den Figuren 1 und 2 dargestellte Luft- düse mit geöffneten Horizontallamellen und vollständig geöffneter Luftklappe;
- Fig. 4: das Betätigungsrad mit angesetztem Koppelele- ment;
- Fig. 5: das Koppelelement als Einzelteil und
- Fig. 6: das Bedienrad als Einzelteil.

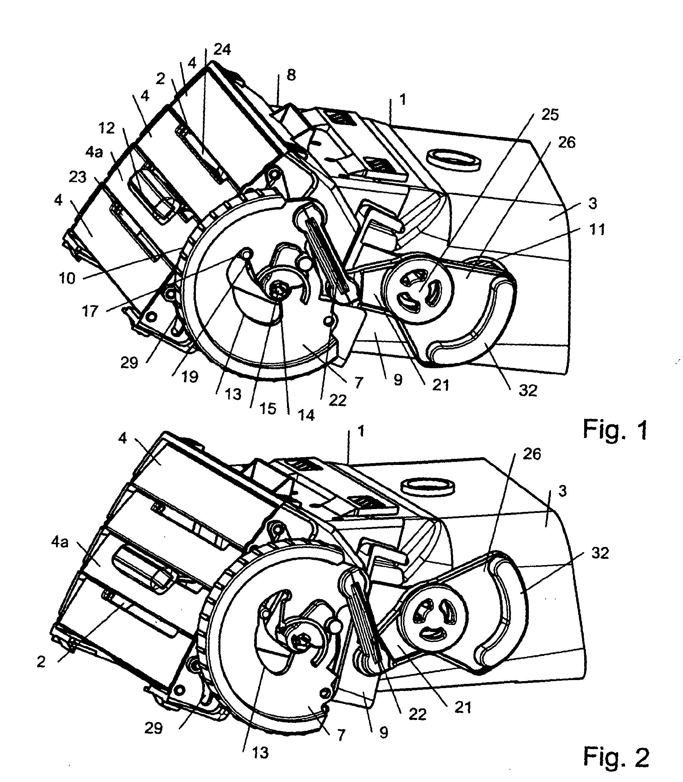

In den Figuren 1, 2 und 3 sind jeweils in perspektivischer Darstellung ein Gehäuse 1 einer Luftdüse dargestellt, das vorderseitig eine Luftausströmöffnung 2 aufweist, in die in den Seitenwänden 9 des Gehäuses 1 verschwenkbar gelagerte Horizontallamellen 4 vorgesehen sind. Diese Horizontallamellen 4 weisen teilweise obenseitig eine Spalte 23 auf. Diese Spalten 23 brauchen nicht vorgesehen sein, sie können aber vorgesehen sein, um beispielsweise einen diffusen Austritt des Luftstromes zu ermöglichen, wenn die Horizontallamellen geschlossen sind und die Luftklappe 11 geringfügig geöffnet ist oder bei geöffneter Luftklappe 11 die Lamellen 4 in die Schließstellung verbracht sind. Eine der Horizontallamellen, nämlich die Lamelle 4a ist als Steuerlamelle ausgebildet. Auf ihr befindet sich ein Schiebeelement 12, das seitlich verschiebbar ist. Dieses Schiebeelement 12 ist rückseitig mit einer Koppelmechanik verbunden, über die die Vertikallamellen 24, die nur angedeutet eingezeichnet sind, ebenfalls verschwenkbar sind, so dass der Luftstrom bei geöffneter Luftklappe sowohl seitlich als auch nach unten oder nach oben abgelenkt werden kann, je nachdem in welchen Winkelstellungen sich die Horizontallamellen 4 und die Vertikallamellen 24 befinden.

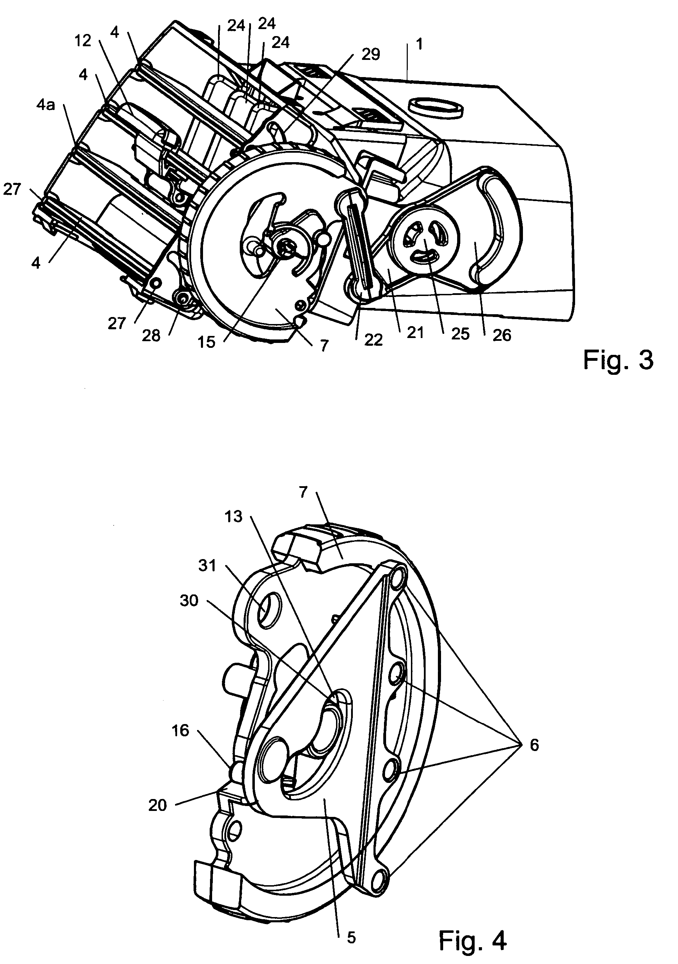

Aus der in Fig. 2 dargestellten Position können die Horizontallamellen 4 in jede beliebige Schrägstellung und in die maximale Öffnungsstellung gemäß Fig. 3 verbracht werden. Unabhängig von der Veränderung der Stellung der Horizontallamellen 4 kann auch die Schrägstellung der Vertikallamellen 24 verändert werden, in dem das Schiebeelement 12 verschoben wird. Aus Fig. 3 ist ersichtlich, dass dieses Schiebeelement 12 über eine Koppelmechanik die drei Vertikallamellen 24 synchron verschwenkt, wenn der Schieber 12 auf der Steuerlamelle 4a verschoben wird. Anstelle der 3 V-Lamellen 24 können auch mehrere V-Lamellen vorgesehen sein. Die Einstellung der Lamellen 4, 24 sind also unabhängig von der Einstellung der Luftklappe möglich.

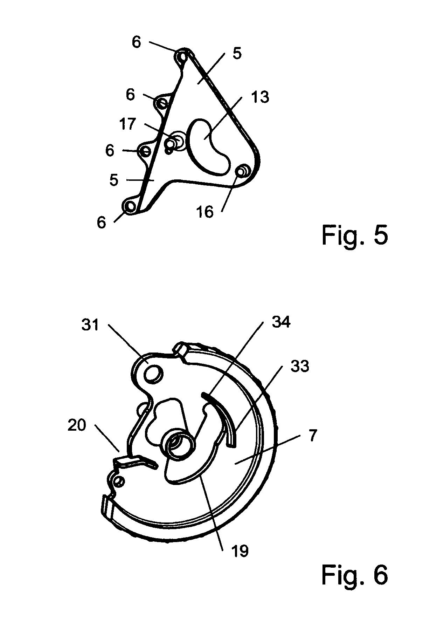

Aus den Figuren 1, 2 und 3 ist ferner ersichtlich, dass die Horizontallamellen 4 beidseitig Lagerzapfen 27 aufweisen, die in Bohrungen in der Seitenwand 9 des Gehäuses 1 eingesteckt und in Ω-förmige Lagerstellen an der hinteren Seitenwand 9 eingerastet sind, wodurch sie leicht montierbar sind. Es ist weiterhin ersichtlich, dass beabstandet zu den Lagerzapfen 27, die eine vorderseitige Schwenkachse bilden, Führungszapfen 28 aus der Stirnfläche der Horizontallamellen 4 hervorstehen und in einer kreisbogenförmigen Führungskulisse 29 geführt sind. Dadurch ist sichergestellt, dass alle vier (es können auch mehrere sein) Horizontallamellen 4 jeweils synchron verschwenkbar sind. Die Mitkopplung zum Verschwenken erfolgt über das Koppelelement 5, das in Fig. 5 hervorgehoben gezeichnet ist, und in Fig. 4 in einer Position zusammen mit dem Bedienrad 7 gezeichnet ist.

Das Bedienrad 7 ist ohne Koppelelement 5 in Fig. 6 dargestellt. Das Koppelelement 5 weist im Ausführungsbeispiel vier (es können auch mehrere sein) beabstandet zueinander in Reihe angeordnete Lagerbohrungen 6 auf. Wird das Koppelelement 5 auf die Führungszapfen 28 aufgesteckt, so erfolgt beim Verschieben des Koppelelementes 5 bedingt durch die Führung der Führungszapfen 28 in den Kulissen 29 eine synchrone Verstellung der Lamellen 4 und gleichzeitig eine Hubbewegung des Koppelelementes 5, wenn eine der Lamellen mit der Hand verstellt wird. Vorzugsweise erfolgt dies durch Bedienung der Steuerlamelle 4a, auf der der Schieber 12 zum Bedienen der Vertikallamellen 24 angeordnet ist, der mit der Hand leichter erfasst werden kann.

Es ist ersichtlich, dass das Koppelelement 5 so gelagert sein muss, dass es bei gleichzeitiger Hub-Schiebe-Bewegung, bedingt durch die Führung der Führungszapfen 28 in den Kulissen 29, in zwei Richtungen verschiebbar gelagert sein muss. Zu diesem Zweck ist der Führungsdurchbruch 13 vorgesehen, mit der das Koppelelement 5 auf den Lagerzapfen 14 am Gehäuse 1 aufgesteckt ist. Diese Anordnung ermöglicht die parallele Verschwenkung der Horizontallamellen 4, wenn diese aus der ersten Öffnungsstellung in jede beliebige weitere Öffnungsstellung oder in die Schließstellung verbracht werden. Dabei werden ferner die an dem Koppelelement 5 vorgesehenen Zapfen 16 und 17 verschoben. Die Zapfen 16 und 17 gleiten mindestens abschnittsweise während der Drehung des Bedienrades 7 an der in das Flächenelement des Bedienrades 7 eingearbeiteten Kulisse 19 und der Führungsrippe 20 bzw. dem Anschlag entlang. Über diese Kulissenbahn 19 ist ein Stützsteg 33 vorgesehen, so dass das Koppelelement 5 um die Höhe des Stützsteges 33 und die Höhe der Anschlagfläche der Führungsrippe 20 definiert über kleine Gleitflächen an dem Bedienrad 7 anliegt.

Das Bedienrad 7 weist ferner einen Mitnahmeansatz an dem Flächenelement auf, in den eine Bohrung 31 eingebracht ist, in die ein Lagerzapfen an einer Koppelstange 22 einsteckbar ist. Die Koppelstange 22 stellt die Verbindung zu einer Kurbel 21 her. Die Kurbel 21 ist im Ausführungsbeispiel als doppelschenkliger Hebelarm ausgebildet und um die Drehachse 25 an der Seitenwand 9 des Gehäuses 1 drehbar gelagert. Der hintere Teil ist als Kreissegmentteil 26 ausgeführt und weist in einem angeformten Aufsatzgehäuse 32 eine nicht sichtbare Lagerung für einen Zapfen auf, der exzentrisch an einer Lagerschale der Luftklappe 11 vorgesehen ist. Dieser Zapfen gleitet im unteren Bereich des Aufsatzgehäuses 32 völlig frei entlang und gelangt erst im oberen Bereich in Eingriff mit einer Mitnahmewand, wodurch die Luftklappe, bedingt durch die Untersetzung bei geringfügigem Schwenkwinkel des Segmentteils 26, verschlossen wird, wenn das Bedienrad 7 nach unten gedreht wird (Fig. 1). Umgekehrt erfolgt bei entgegengesetzter Drehrichtung des Bedienrades 7 zunächst ein schnelles Öffnen der Luftklappe 11, bevor über den Zapfen 17 und die Kulissenbahn 19 die Lamellen 4 in die erste Öffnungsstellung (Fig. 2) verschwenkt werden.

Anstelle dieser Kopplung kann in dem Aufsatzgehäuse 26 auch eine Verzahnung vorgesehen sein, in die ein Ritzel auf der Achse der nicht sichtbaren, im hinteren Teil des Gehäuses 1 im hinteren Teil gelagerten Luftklappe eingreift, die um 90° verschwenkbar ist, so dass sie aus einer Schließstellung, in der sie quer zur Strömungsrichtung im rückseitigen Anschluss 3 zur Anlage kommt, in eine in Längsachsenrichtung des Gehäuses 1 verlaufende Schwenkposition verbracht werden kann. Deshalb weist das Segmentteil 26 einen solchen Winkel auf, dass die Verstellung über das Zahnradgetriebe ermöglicht wird und darüber hinaus ein Leerbereich gegeben ist, in dem ein weiteres Drehen des Ritzels nicht erfolgt und das Ritzel mit der Verzahnung außer Eingriff kommt, so dass bei entgegengesetzter Schwenkbewegung zunächst um einen Winkel eine Verstellung ermöglicht wird, in der die Luftklappe verschlossen bleibt, jedoch die mit dem Bedienrad über die Kulissenbahn 19 und dem Zapfen 17 erfolgte Kopplung die Horizontallamellen 4 in die ersten Öffnungsposition gemäß Fig. 2 verschwenkt werden, bevor durch weiteres Drehen des Bedienrades nach oben über den aus der Frontwand vorstehenden Bedienabschnitt 10 die Luftklappe geöffnet wird.

In der in Fig. 2 dargestellten ersten Öffnungsstellung können nun die Horizontallamellen 4 unabhängig von der Schließklappe 11 in jede beliebige weitere Öffnungsstellung verbracht werden, bis hin in die in Fig. 3 dargestellte maximale Öffnungsstellung, da sich der Zapfen 16 zu der Führungsrippe 20 frei bewegen kann bzw. absteht. Der Zapfen 17 bewegt sich in der Kulissenbahn 19 frei, bis er an der Kulissengeometrie zum Anschlag kommt. In dem Bereich dazwischen können die Horizontallamellen 4 individuell verschwenkt werden. Dabei gelangt die Führungsrippe 20 des Bedienrades 7 in Berührung mit dem Zapfen 16 des Koppelelementes 5. Dadurch werden bei weiteren Verdrehen des Bedienrades 7 die Horizontallamellen 4 in die geschlossene Stellung verschwenkt. Der Zapfen 17 bewegt sich währenddessen in der Kulissenbahn 19, bis er in die Falle 34 eintritt, so dass die Horizontallamellen 4 und die Luftklappe 11, wie aus Fig. 1 ersichtlich, geschlossen sind.

Die Wirkungsbeschreibung lässt sich wie folgt zusammenfassen:
- Horizontallamellen 4 geschlossen - Luftklappe 11 geschlossen:
   Das Bedienrad 7 befindet sich in einer Endstellung geschlossen. Die Führungsrippe 20 wirkt auf den Zapfen 16 und verhindert in Verbindung mit dem Zapfen 17 in der Kulissenbahn 19 ein Verstellen des Koppelelementes 5 und somit ein Verstellen der Horizontallamellen 4.
- H-Lamellen 4 minimal geöffnet - Luftklappe 11 geschlossen:
   Das Bedienrad 7 wird geringfügig in Richtung "offen" gedreht. Dadurch führt der Zapfen 17 eine Relativbewegung zu der Kulissenbahn 19 durch. Gleichzeitig wird der Zapfen 16 von der Führungsrippe 20 freigegeben. Ab dieser Position des Bedienrades 7 lassen sich die Horizontallamellen 4 und die Luftklappe 11 individuell in jede Position verstellen.
- H-Lamellen 4 minimal bis voll geöffnet - Luftklappe 11 minimal bis voll geöffnet:
   Mit Drehung des Bedienrades 7 in Richtung "offen" kann jede Position der Luftklappe eingestellt werden. Horizontal- und Vertikallamellen 4, 24 können durch das auf der Steuerlamelle 4a befestigte schiebebewegliche Bedienelement 12 in jede gewünschte Position eingestellt werden.
- H-Lamellen 4 in beliebiger Position - Luftklappe 11 geöffnet (Fig. 3):
   Das Bedienrad 7 wird in Richtung "geschlossen" bewegt und bringt die Führungsrippe 20 in eine Wirkposition mit dem Zapfen 16. Durch Weiterdrehen des Bedienrades 7 in Position "geschlossen" führt das Koppelelement 5 in Verbindung mit dem Zapfen 17 auf der Kulissenbahn 19 eine Schwenkbewegung durch und bewirkt eine geschlossene Stellung der H-Lamellen 4. Die Horizontallamellen 4 sind durch die Wirkverbindung der Zapfen 16 und 17 des Koppelelementes 5 sowie die Führungsrippe 20 und der Falle 34 des Bedienrades 7 gegen Verstellung arretiert.

Es ist ersichtlich, dass anstelle der hier beschriebenen Kulissenführungen auch andere Kulissenführungen oder Zwischengetriebe angebracht werden können, um die gewünschte zeitliche Reihenfolge beim Öffnen der Luftklappe 11 und der Horizontallamellen 4 einerseits und dem zwangsweisen Schließen bei entgegengesetzter Betätigungsrichtung des Bedienrades 7 andererseits sicherzustellen. Ebenso können die Führungskulissen für die Horizontallamellen 4 der unteren beiden Horizontallamellen gegenüber den oberen entgegengesetzt verlaufend angeordnet sein. In diesem Fall müssen zwei Koppelelemente vorgesehen sein, wobei diese miteinander beweglich in Wirkverbindung stehen, wobei nur eine vom Bedienort betätigt wird und die andere mitgenommen wird und entgegengesetzt sich verschiebt.

Soweit im Vorhergehenden von Horizontal- bzw. von Vertikallamellen gesprochen worden ist, so ist die Anordnung nicht bindend. Selbstverständlich können auch die Vertikallamellen vorderseitig angebracht sein und die Horizontallamellen dahinter liegen. Das Wirkungsprinzip ist auch dann auf die vorderen Lamellen anwendbar. Sie sind lediglich um 90° verdreht. Die Erfindung ist selbstverständlich auch auf eine Anordnung anwendbar, bei der nur ein Lamellensatz vorgesehen ist, gleich ob diese nun vertikal oder horizontal angeordnet sind.

### Bezugszeichenliste

- 1: Gehäuse
- 2: Luftausströmöffnung
- 3: rückseitiger Anschluss
- 4: Lamellen (Horizontallamellen)
- 4a: Steuerlamelle
- 5: Koppelelement
- 6: Lagerbohrung
- 7: Bedienrad
- 8: Gehäuseteil
- 9: Gehäusewand
- 10: Bedienabschnitt
- 11: Luftklappe
- 12: Schiebeelement
- 13: Führungsdurchbruch
- 14: Lagerzapfen
- 15: Bahn/Achse
- 16: erster Zapfen
- 17: zweiter Zapfen
- 19: Kulissenbahn
- 20: Führungsrippe
- 21: Kurbel
- 22: Koppelstange
- 23: Spalte
- 24: Vertikallamelle
- 25: Drehachse
- 26: Segmentteil
- 27: Lagerzapfen
- 28: Führungszapfen
- 29: Kulisse
- 31: Bohrung
- 32: Aufsatzgehäuse
- 33: Stützsteg
- 34: Falle

## Patentansprüche

1. Luftdüse zur Führung eines Luftstromes aus einem Luftzuführschacht oder einer Leitung in Heizungs-, Lüftungs- oder Klimaanlagen, insbesondere in Kraftfahrzeugen, bestehend aus einem Gehäuse (1), das in einen Wanddurchbruch einsetzbar ist und das eine vorderseitige Luftausströmöffnung (2) und einen rückseitigen Anschluss (3) für einen Luftzuführschacht oder eine Luftzuführleitung aufweist, wobei im Gehäuse (1) mehrere Lamellen (4) abgestützt sind, die durch ein Koppelelement (5) mit mehreren Lagern (6) miteinander verbunden und gleichartig durch Krafteinwirkung auf mindestens eine als Steuerlamelle (4a) dienende Lamelle (4) und/oder durch das Koppelelement (5) verschwenkbar sind und die in Abhängigkeit von der jeweiligen Schwenkposition unterschiedliche Arten von Ableitungen des Luftstroms bewirken, und im rückseitigen Teil des Gehäuses (1) mindestens eine Luftklappe (11) verschwenkbar angeordnet ist, die mit einem Bedienrad (7), das im vorderen Gehäuseteil (8) oder außenseitig an einer Gehäusewand (9) oder einem Träger drehbar gelagert ist und einen zugänglichen Bedienabschnitt (10) aufweist, in Wirkverbindung steht und aus einer Schließstellung durch Drehung des Bedienrades (7) in eine Öffnungsstellung und/oder eine Zwischenstellung verbringbar ist, wobei das Bedienrad (7) und die Luftklappe (11) einerseits und das Bedienrad (7) mit der Lamellenanordnung mit den Lamellen (4) andererseits über eine derartige Kinematikanordnung gekoppelt sind, dass die Lamellen (4) beim Verschließen der Luftklappe (11) durch Drehung des Bedienrades (7) in eine Richtung automatisch aus jeder Öffnungsstellung in die Schließposition verbringbar sind und durch entgegengesetztes Drehen des Bedienrades (7) beim Öffnen oder vor oder nach dem Öffnen der Luftklappe (11) die Lamellen (4) mindestens in eine erste Öffnungsstellung verschwenken, **dadurch gekennzeichnet, dass** aus dieser ersten Öffnungsstellung die Lamellen durch Bedienen der Steuerlamelle (4a) in beliebige Öffnungsstellungen unabhängig vom weiteren Drehen des Bedienrades (7) in gleiche Richtung verschwenkbar sind.

2. Luftdüse nach Anspruch 1, **dadurch gekennzeichnet, dass** das Koppelelement (5) auf der Achse (15) des Bedienrades (7) mit einem Führungsdurchbruch (13) verschieb- und verschwenkbar gelagert ist und durch an einer Kulissenbahn (19) und einer Führungsrippe (20) des Bedienrades (7) anliegende Zapfen (16, 17) die an dem Koppelelement (5) angebracht sind, beim Drehen des Bedienrades (7) in der einen oder anderen Drehrichtung verschiebbar sind.

3. Luftdüse nach Anspruch 1 oder 2, **dadurch gekennzeichnet, dass** die Lamellen (4) Horizontallamellen sind und auf der Steuerlamelle (4a) ein Schiebeelement (12) als Bedienelement für mitgekoppelte Vertikallamellen (5) vorgesehen ist, die im Inneren des Gehäuses (1) abgestützt und miteinander über eine Koppelstange verbunden und verschwenkbar gelagert sind.

4. Luftdüse nach Anspruch 1, **dadurch gekennzeichnet, dass** an der Schwenkachse der Luftklappe (11) eine Kurbel (21) befestigt ist, die über eine Koppelstange (22) in Wirkverbindung mit dem Bedienrad (7) steht oder die Luftklappe (11) über ein Kurbelgetriebe (21, 22, 26) verschwenkbar ist, das mit dem Bedienrad (7) gekoppelt ist.

5. Luftdüse nach Anspruch 2 oder 3, **dadurch gekennzeichnet,**
- **dass** das Koppelelement (5) an einer Seite Lagerbohrungen (6) für stirnseitig aus den Seitenflächen der Lamellen (4) vorstehende Mitnahmezapfen und ein Flächenelement mit einem kreissegmentförmigen Führungsdurchbruch (13) aufweist, in den eine Lagerhülse (14) oder ein Lagerzapfen (14) auf der Drehachse des Bedienrades (7) eingreift,
- **dass** das Flächenelement des Bedienrades (7) eine Kulissenbahn (19) und eine Führungsrippe (20) mit Endanschlägen aufweist, die in Wirkverbindung mit einem ersten (16) und einem zweiten (17) an dem Koppelelement (5) angebrachten Zapfen stehen, wobei die Kulissenbahn (19) und die Führungsrippe (20) so aufeinander abgestimmt angeordnet sind und einen solchen Kurvenverlauf aufweisen, dass beim Drehen des Bedienrades (7) in die eine Richtung der erste Zapfen (16) an der Führungsrippe (20) mindestens teilweise entlanggleitet und der zweite Zapfen (17) an der Kulissenbahn (19) mindestens teilweise anliegt, wobei der erste Zapfen (16) gegen einen Endanschlag der Führungsrippe(20) und der zweite Zapfen (17) gegen einen Endanschlag der Kulissenbahn (19) fährt, wordurch ein weiteres Verstellen des Koppelelementes (5) verhindert wird,
- **dass** bei gegenläufiger Drehung des Bedienrades (7) der zweite Zapfen (17) eine Relativbewegung gegenüber der Kulissenbahn (19) durchführt und der erste Zapfen (16) von der Führungsrippe (20) abhebt, wodurch die Lamellen (4) in die erste Öffnungsstellung gelangen und unabhängig vom Bedienrad (7) betätigbar sind, und
- **dass** mit weiterer Drehung des Bedienrades (7) die Luftklappe in eine individuelle Öffnungsstellung verschwenkbar ist.

6. Luftdüse nach Anspruch 1, **dadurch gekennzeichnet, dass** die Lamellen (4) mindestens an den schmalen Stirnseiten Lagerzapfen (27), die in Lagerbohrungen in den Gehäusewänden (9) drehbar gelagert sind, und Führungszapfen (28) beabstandet zu den Lagerzapfen (27) aufweisen, die in kreisbogenförmigen Kulissen (29) um die jeweilige Lagerbohrung beim Verschwenken der Lamelle (4) geführt sind und auf deren vorstehendes Ende die jeweilige Lagerbohrung (6) an dem Koppelelement (5) aufsetzbar ist.

7. Luftdüse nach Anspruch 4, **dadurch gekennzeichnet, dass** die Kurbel (21) einen ersten Kurbelbetätigungsarm (21) aufweist, der über eine Koppelstange (22) schwenkbeweglich mit dem Bedienrad (7) verbunden ist, dass über die Drehachse (25) der Kurbel hinausgehend ein Segmentteil vorgesehen ist, an oder in welchem eine Mitnahmeverzahnung oder ein Mitnahmebelag angeordnet ist, in das ein auf der Schwenkachse der Luftklappe (11) vorgesehenes Ritzel oder ein Mitnahmerad oder ein konzentrisch vorstehender Zapfen an einer Lagerscheibe der Luftklappe eingreift, wodurch die Schwenkbewegung des Segmentteils (26) in eine Drehbewegung der Luftklappe (11) transformierbar ist.

8. Luftdüse nach Anspruch 7, **dadurch gekennzeichnet, dass** bei geschlossener Luftklappe (11) die Kurbel (21) erst bewegbar ist oder das Ritzel oder Mitnahmerad oder der Zapfen erst in Wirkverbindung mit der Mitnahmefläche gelangt, wenn durch Mitkopplung über das Koppelelement (5) die Lamellen (4) in die erste Öffnungsstellung verschwenkt sind.

9. Luftdüse nach Anspruch 7, **dadurch gekennzeichnet, dass** beim Drehen des Bedienrades (7) aus der Schließstellung der Luftklappe (11) zunächst die Luftklappe mindestens teilweise öffnet, bevor die Lamellen (4) in die erste Öffnungsstellung verschwenken.

10. Luftdüse nach Anspruch 1, **dadurch gekennzeichnet, dass** nach Erreichen der ersten Öffnungsstellung die Lamellen (4) durch weiteres Drehen des Bedienrades (7) in die gleiche Richtung von dem Koppelelement (5) zusätzlich auch gemeinsam verstellbar sind.

## Claims

1. Air nozzle for guiding an air flow from an air feed shaft or a duct in heating, ventilating or air-conditioning installations, particularly in motor vehicles, consisting of a housing 1, which is insertable in a wall passage and which has an air outlet opening (2) at a front side and a connection (3) at a rear side for an air feed shaft or an air feed duct, wherein supported in the housing (1) are several slats (4), which are connected together by a coupling element (5) with several bearings (6) and are pivotable in the same manner by the action of force on at least one slat (4) serving as a control slat (4a) and/or by the coupling element (5) and which produce different forms of discharge of the air flow depending on the respective pivot position, and at least one air flap (11) is pivotably arranged in the part of the housing (1) at the rear side, which flap is disposed in operative connection with a control wheel (7) rotatedly mounted in the front housing part (8) or externally at a housing wall (9) or a support and having an accessible control section (10), and which can be brought from a closed setting by rotation of the control wheel (7) into an open setting and/or an intermediate setting, wherein the control wheel (7) and the air flap (11) on the one hand and the control wheel (7) with the slat arrangement with the slats (4) on the other hand are coupled by way of such a kinematic arrangement that the slats (4) on closing of the air flap (11) by rotation of the control wheel (7) can be brought in one direction automatically from each open setting into the closed position and by opposite rotation of the control wheel (7) at the time of or before or after opening of the air flap (11) the slats (4) pivot at least into a first open setting, **characterised in that** the slats are pivotable in the same direction from this first open setting by operation of the control slat (4a) into any open settings independently of the further rotation of the control wheel (7).

2. Air nozzle according to claim 1, **characterised in that** the coupling element (5) is mounted on the axle (15) of the control wheel (7) by a guide passage (13) to be displaceable and pivotable, and pins (16, 17), which bear against a gate guide track (19) and a guide rib (20) of the control wheel (7) and which are mounted at the coupling element (5), are displaceable in one or the other rotational direction on rotation of the control wheel (7).

3. Air nozzle according to claim 1 or 2, **characterised in that** the slats (4) are horizontal slats and provided on the control slat (4a) is a displacing element (12) as control element for vertical slats (5), which are coupled therewith and supported in the interior of the housing (1) and which are connected together by way of a control rod and mounted to be pivotable.

4. Air nozzle according to claim 1, **characterised in that** fastened to the pivot axle of the air flap (11) is a crank (21) which is disposed in operative connection with the control wheel (7) by way of a coupling rod (22), or the air flap (11) is pivotable by way of a crank transmission (21, 22, 26) coupled with the control wheel (7).

5. Air nozzle according to claim 2 or 3, **characterised in that**
- the coupling element (5) has at one side mounting bores (6) for entraining pins, which protrude at the end face from the side surfaces of the slats (4), and an areal element with a guide passage (13) which is of circularly segmental shape and in which a bearing sleeve (14) or a bearing pin (14) on the rotational axle of the control wheel (7) engages,
- the areal element of the control wheel (7) has a gate guide track (19) and a guide rib (20) with end abutments disposed in operative connection with a first pin (16) and second pin (17) mounted on the coupling element (5), wherein the gate guide track (19) and the guide rib (20) are so arranged in adaptation to one another and have such a curve course that on rotation of the control wheel (7) in the one direction the first pin (16) slides at least partly along the guide rib (20) and the second pin (17) bears at least partly against the gate guide track (19), wherein the first pin (16) moves against an end abutment of the guide rib (20) and the second pin (17) against an end abutment of the gate guide track (19), whereby further adjustment of the coupling element (5) is prevented,
- on rotation of the control wheel (7) in opposite sense the second pin (17) executes a movement relative to the gate guide track (19) and the first pin (16) lifts off the guide rib (20), whereby the slats (4) pass into the first open setting and are actuable independently of the control wheel (7) and
- with further rotation of the control wheel (7) the air flap is pivotable into an individual open setting.

6. Air nozzle according to claim 1, **characterised in that** the slats (4) have at least at the narrow end faces bearing pins (27), which are rotatably mounted in bearing bores in the housing walls (9), and guide pins (28), which are spaced from the bearing pins (27) and are guided in arcuate guides (29) about the respective bearing bore on pivotation of the slats (4) and on the protruding end of which the respective bearing bore (6) at the coupling element (5) is placeable.

7. Air nozzle according to claim 4, **characterised in that** the crank (21) has a first crank actuating arm (21), which is connected by way of a coupling rod (22) with the control wheel (7) to be pivotably movable, that provided to project beyond the rotational axle (25) of the crank is a segment part at or in which is arranged an entraining toothing or an entraining covering in which a pinion, which is provided on the pivot axle of the air flap (11), or an entrainer wheel or a concentrically protruding pin at a bearing disc of the air flap engages, whereby the pivot movement of the segment part (26) is translatable into a rotary movement of the air flap (11).

8. Air nozzle according to claim 7, **characterised in that** when the air flap (11) is closed the crank (21) is only movable or the pinion or entrainer wheel or the pin only passes into operative connection with the entraining surface if through coupling therewith by way of the coupling element (5) the slats (4) are pivoted into the first open setting.

9. Air nozzle according to claim 7, **characterised in that** on rotation of the control wheel (7) from the closed setting of the air flap (11) initially the air flap opens at least partly before the slats (4) pivot into the first open setting.

10. Air nozzle according to claim 1, **characterised in that** after reaching the first open setting the slats (4) are adjustable additionally also together by the coupling element (5) through further rotation of the control wheel (7) in the same direction.

## Revendications

1. Buse à air pour le guidage d'un flux d'air à partir d'un puits d'alimentation en air ou d'une canalisation d'une installation de chauffage, d'aération ou de climatisation, en particulier dans des véhicules à moteur, constituée d'un carter (1) qui peut être installé dans une percée de paroi et qui présente une ouverture d'écoulement de l'air (2) sur le devant et un raccord à l'arrière (3) pour un puits d'alimentation en air ou une canalisation d'alimentation en air, plusieurs lamelles (4) étant étayées dans le carter (1), lesquelles sont reliées entre elles par un élément de couplage (5) avec plusieurs paliers (6) et peuvent pivoter de la même façon par l'exercice d'une force sur au moins une lamelle (4) servant de lamelle de commande (4a) et/ou grâce à l'élément de couplage (5) et agissent, en fonction de la position de pivotement respective, de différentes façons en tant que dérivations du flux d'air, et (1) au moins un volet d'aération (11) étant disposé dans la partie arrière du carter et pouvant basculer, lequel présente une roue de commande (7) logée de façon rotative dans la partie avant du carter (8) ou sur la face externe d'une paroi du carter (9) ou d'un support, ainsi qu'une section de commande (10) accessible qui est assemblée mécaniquement et peut passer d'une position fermée, par rotation de la roue de commande (7), à une position ouverte et/ou à une position intermédiaire, la roue de commande (7) et le volet d'aération (11) d'une part et la roue de commande (7) avec l'ensemble de lamelles (4) d'autre part étant reliés par une structure cinématique telle que, lors de la fermeture du volet d'aération (11) par rotation de la roue de commande (7), les lamelles (4) passent automatiquement, dans une direction, de la position ouverte à la position fermée et, lors de la rotation de la roue de commande (7) dans le sens inverse lors de l'ouverture ou avant ou après l'ouverture du volet d'aération (11), les lamelles (4) pivotent au moins dans une première position d'ouverture , **caractérisée en ce qu'**à partir de cette première position d'ouverture, les lamelles peuvent pivoter dans la même direction par actionnement de la lamelle de commande (4a) dans des positions d'ouverture quelconques, indépendamment de la rotation supplémentaire de la roue de commande (7).

2. Buse à air selon la revendication 1, **caractérisée en ce que** l'élément de couplage (5) est logé sur l'axe (15) de la roue de commande (7) de façon à pouvoir être déplacé et pivoter avec une ouverture de guidage (13), et que d pivots (16, 17) montés sur l'élément de couplage (5) et touchant un guide-coulisse (19) et une rainure de guidage (20) de la roue de commande (7) peuvent être décalés dans l'un ou l'autre sens de rotation.

3. Buse à air selon la revendication 1 ou 2, **caractérisée en ce que** les lamelles (4) sont des lamelles horizontales et qu'un élément poussoir (12) est prévu sur la lamelle de commande (4a) en tant qu'élément de commande pour les lamelles verticales couplées (5) qui sont étayées à l'intérieur du carter (1), reliées les unes aux autres par une bielle d'accouplement et logées de manière à pouvoir pivoter.

4. Buse à air selon la revendication 1, **caractérisée en ce que** sur l'axe pivotant du volet d'aération (11) une manivelle (21) est fixée, laquelle est reliée mécaniquement par une bielle d'accouplement (22) à la roue de commande (7) ou **en ce qu'**il est possible de faire pivoter le volet d'aération (11) au moyen d'un entraînement à bielle (21, 22, 26) qui est relié à la roue de commande (7).

5. Buse à air selon la revendication 2 ou 3, **caractérisée**
- **en ce que** l'élément de couplage (5) présente sur un côté des alésages de palier (6) pour des pivots d'entraînement en saillie des lamelles (4), sur la face frontale, et un élément de surface avec une ouverture de guidage (13) en forme de segment de cercle dans laquelle une douille de palier (14) ou un tourillon (14) est en prise sur l'axe de rotation de la roue de commande (7),
- **en ce que** l'élément de surface de la roue de commande (7) présente à un guide-coulisse (19) et une rainure de guidage (20) avec des butées qui sont assemblées mécaniquement avec un premier (16) et un second (17) pivots montés sur l'élément de couplage (5), le guide-coulisse (19) et la rainure de guidage (20) étant disposés l'un par rapport à l'autre et formant une courbe telle que lorsque la roue de commande (7) tourne dans une direction , le premier pivot (16) glisse, au moins partiellement, le long de la rainure de guidage (20) et que le second pivot (17) touche, au moins partiellement, le guide-coulisse (19), le premier pivot (16) atteignant une butée de la rainure de guidage (20) et le second pivot (17) atteignant une butée du guide-coulisse (19), ce qui empêche un déplacement supplémentaire de l'élément de couplage (5),
- **en ce que** lorsque la roue de commande (7) tourne dans le sens inverse, le second pivot (17) réalise un mouvement relatif par rapport au guide-coulisse (19) et le premier pivot (16) se soulève de la rainure de guidage (20), ce qui permet aux lamelles (4) de passer en première position d'ouverture et de pouvoir être actionnées indépendamment de la roue de commande (7), et
- **en ce que** lorsque la roue de commande (7) continue de tourner, le volet d'aération peut pivoter dans une position d'ouverture individuelle.

6. Buse à air selon la revendication 1, **caractérisée en ce que** les lamelles (4) présentent, au moins sur leurs faces frontales étroites, des tourillons (27) logés de façon rotative dans des alésages de palier des parois du carter (9) et des pivots de guidage (28) éloignés des tourillons (27) qui sont guidés dans des coulisses en arc de cercle (29) autour de l'alésage de palier correspondant lors du pivotement de la lamelle (4) et sur l'extrémité en saillie desquels l'alésage de palier (6) correspondant peut être monté sur l'élément de couplage (5).

7. Buse à air selon la revendication 4, **caractérisée en ce que** la manivelle (21) présente un premier bras d'actionnement (21) qui est relié à la roue de commande (7) par l'intermédiaire d'une bielle d'accouplement (22) de manière à pouvoir pivoter, **en ce qu'**au-delà de l'axe de rotation (25) de la manivelle, un segment sur lequel ou dans lequel est placé(e) un engrenage d'entraînement ou une armature d'entraînement est prévu, dans lequel s'engrène un pignon prévu sur l'axe de pivotement du volet d'aération (11) ou une roue d'entraînement ou encore un pivot avant concentrique monté sur un disque de palier du volet d'aération, ce qui permet de transformer le mouvement de pivotement du segment (26) en un mouvement de rotation du volet d'aération (11).

8. Buse à air selon la revendication 7, **caractérisée en ce que**, lorsque le volet de ventilation est fermé (11), la manivelle (21) peut être seulement déplacée ou le pignon ou la roue d'entraînement ou encore le pivot peut uniquement être assemblé mécaniquement avec la surface d'entraînement si, en raison de l'entraînement assuré par l'élément de couplage (5), les lamelles (4) pivotent en première position d'ouverture.

9. Buse à air selon la revendication 7, **caractérisée en ce que**, lors de la rotation de la roue de commande (7) à partir de la position de fermeture du volet d'aération (11), celui-ci s'ouvre d'abord partiellement avant que les lamelles (4) pivotent en première position d'ouverture.

10. Buse à air selon la revendication 1, **caractérisée en ce qu'**après avoir atteint la première position d'ouverture, les lamelles (4) peuvent aussi être déplacées de façon commune, dans la même direction, par l'élément de couplage (5), par rotation supplémentaire de la roue de commande (7).
